(19) Europäisches Patentamt
European Patent Office
Office européen des brevets

(11) **EP 3 217 338 A1**

(12) **EUROPÄISCHE PATENTANMELDUNG**

(43) Veröffentlichungstag:
**13.09.2017 Patentblatt 2017/37**

(51) Int Cl.:
***G06Q 10/08*** *(2012.01)*

(21) Anmeldenummer: **16159681.2**

(22) Anmeldetag: **10.03.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **KNAPP Systemintegration GmbH**
**8700 Leoben (AT)**

(72) Erfinder:
• **Kutzelnigg, Reinhard**
  **7035 Steinbrunn (AT)**
• **Schlögl, David**
  **8700 Leoben (AT)**

(74) Vertreter: **Wirnsberger, Gernot**
**Wirnsberger & Lerchbaum Patentanwälte OG**
**Mühlgasse 3**
**8700 Leoben (AT)**

(54) **VERFAHREN ZUM AUFTEILEN EINES KOMMISSIOINIERAUFTRAGES**

(57)     Die Erfindung betrifft ein Verfahren zum Aufteilen eines eine Vielzahl von Kolli umfassenden Kommissionierauftrages auf mehrere Ladungsträger, welche Kolli von einem Quelllager mittels eines Transportfahrzeuges in ein Ziellager und im Ziellager zu Zielpositionen transportiert werden. Um einen besonders effizienten Transport zu erreichen, ist erfindungsgemäß vorgesehen, dass vor einer Aufteilung des Kommissionierauftrages mehrere Varianten möglicher Aufteilungen rechnerisch gebildet werden, wonach eine Auswahl einer Variante erfolgt, gemäß welcher die Aufteilung durchgeführt wird, wobei für verschiedene berechnete Varianten eine Anzahl von Fahrten bestimmt wird, welche erforderlich sind, um die einzelnen Kolli im Ziellager mit den Ladungsträgern vom Transportfahrzeug zu den Zielpositionen zu transportieren, und wobei die Anzahl der Fahrten in die Auswahl eingeht.

Weiter betrifft die Erfindung einen computerlesbaren Datenträger.

Fig. 1

**Beschreibung**

Die Erfindung betrifft ein Verfahren zum Aufteilen eines eine Vielzahl von Kolli umfassenden Kommissionierauftrages auf mehrere Ladungsträger, welche Kolli von einem Quelllager mittels eines Transportfahrzeuges in ein Ziellager und im Ziellager zu Zielpositionen transportiert werden.

Weiter betrifft die Erfindung einen computerlesbaren Datenträger.

Aus dem Stand der Technik sind verschiedene Verfahren zum Aufteilen eines Kommissionierauftrages bekannt geworden. Eine derartige Aufteilung ist beispielsweise erforderlich, um unterschiedliche für ein Ziellager wie einen Supermarkt bestimmte Waren aus einem Quelllager wie einem Zentrallager für mehrere Supermärkte mittels eines LKWs in den jeweiligen Supermarkt zu transportieren. Dabei werden die einzelnen Kolli des Kommissionierauftrages, welche die Waren enthalten, zunächst im Zentrallager auf verschiedene Ladungsträger verteilt. Die häufig als Rollbehälter ausgebildeten Ladungsträger werden anschließend in einen LKW oder dergleichen verfahren, mit welchem die Ladungsträger vom Zentrallager zum Supermarkt transportiert werden. Am Supermarkt selbst werden die Ladungsträger anschließend aus dem LKW entnommen, wonach die einzelnen Kolli mittels der Ladungsträger im Supermarkt verfahren werden, um die einzelnen Kolli zu endgültigen Zielpositionen zu transportieren, an denen beispielsweise Regale angeordnet sind. Anschließend können die Kolli selbst oder die aus den Kolli ausgepackten Waren in entsprechende Regale gelegt werden. Die leeren Ladungsträger können dann für einen weiteren Warentransport wieder ins Zentrallager transportiert werden.

Bei Verfahren des Standes der Technik erfolgt dabei eine Aufteilung des Kommissionierauftrages im Zentrallager in der Regel derart, dass die einzelnen Kolli des Kommissionierauftrages manuell auf verschiedene Ladungsträger aufgeteilt werden. Dabei wird jedoch nur eine unzureichende Effizienz bei einem Transport von Waren von einem Quelllager bis zu den Zielpositionen erzielt.

Hier setzt die Erfindung an. Aufgabe der Erfindung ist es, ein Verfahren der eingangs genannten Art anzugeben, mit welchem ein besonders effizienter Transport von Waren eines Kommissionierauftrages von einem Quelllager zu einer oder mehreren Zielpositionen möglich ist.

Diese Aufgabe wird erfindungsgemäß durch ein Verfahren der eingangs genannten Art gelöst, bei welchem vor einer Aufteilung des Kommissionierauftrages mehrere Varianten möglicher Aufteilungen rechnerisch gebildet werden, wonach eine Auswahl einer Variante erfolgt, gemäß welcher die Aufteilung durchgeführt wird, wobei für verschiedene berechnete Varianten eine Anzahl von Fahrten bestimmt wird, welche erforderlich sind, um die einzelnen Kolli im Ziellager mit den Ladungsträgern vom Transportfahrzeug zu den Zielpositionen zu transportieren, und wobei die Anzahl der Fahrten in die Auswahl eingeht.

Im Rahmen der Erfindung wurde erkannt, dass eine besonders hohe logistische Effizienz bei einem Transport der Waren erzielt werden kann, wenn vor einer realen bzw. physischen Aufteilung des Kommissionierauftrages verschiedene Alternativen bzw. Varianten von Aufteilungen rechnerisch gebildet bzw. rechnerisch simuliert und bei Auswahl einer von mehreren möglichen Aufteilungen auch Fahrten der Ladungsträger am Zielort berücksichtigt werden. Dieses Verfahren kann auch einfach automatisiert, insbesondere rechnergestützt, umgesetzt werden, sodass auch mit ungeschultem Personal eine für einen effizienten Transport günstige Aufteilung erreicht werden kann.

Beispielsweise kann eine Anzahl von Fahrten reduziert werden, wenn in einen Ladungsträger Warengruppen zusammengefasst werden, welche im Supermarkt in angrenzenden Regalen positioniert werden. So sind Knabbergebäck und Konserven unterschiedliche Warengruppen, welche im Quelllager meist an unterschiedlichen Positionen gelagert sind. Bei Verfahren des Standes der Technik werden diese Warengruppen daher in der Regel auf unterschiedliche Ladungsträger aufgeteilt. Es sind daher am Zielort auch dann zumindest zwei Fahrten erforderlich sind, wenn Konserven und Knabbergebäck im Supermarkt im selben Regal positioniert sind, um sowohl das Knabbergebäck als auch die Konserven mit den Ladungsträgern zu den jeweiligen Zielpositionen zu transportieren. Ist das Volumen eines Ladungsträgers ausreichend, kann hier durch Kombination der beiden Warengruppen auf einem Ladungsträger somit eine Fahrt am Zielort reduziert und die Effizienz verbessert werden, indem Knabbergebäck und Konserven mit einem Ladungsträger gemeinsam zum jeweiligen Regal transportiert werden.

In der Regel werden die Ladungsträger am Zielort verfahren. Es versteht sich jedoch, dass das Verfahren auch dann anwendbar ist, wenn die Ladungsträger auf andere Weise vom Transportfahrzeug zu den Zielpositionen transportiert werden, beispielsweise manuell oder maschinell getragen oder geflogen. Der Transport kann weiter auch Zwischenstopps enthalten, ohne dass dies den Rahmen der Erfindung verlassen würde.

Entsprechend kann ergänzend zu einer Anzahl der Fahrten auch eine Länge und/oder eine Dauer der Fahrten bzw. Transportoperationen am Zielort bei Bewertung und Auswahl einer Variante berücksichtigt werden.

Unter Ladungsträger wird hierbei jedes Mittel verstanden, auf oder in welchem Waren gelagert oder mit welchem Waren zum gemeinsamen Transport zusammengefasst werden können, beispielsweise offene Behälter, teilweise oder gänzlich geschlossene Behälter mit und ohne Seitenwände sowie Paletten und dergleichen.

Es versteht sich, dass das Verfahren auch bei mehrstufiger Aufteilung von Waren im Transportprozess eingesetzt werden kann. Beispielsweise können Kolli eines Kommissionierauftrages auf mehrere Kisten aufgeteilt werden, wonach die Kisten auf mehrere Paletten aufgeteilt werden. Hierbei können mittels des Verfahrens verschiedene Varianten von Aufteilungen der Kolli in den Kisten und von Kisten auf den Paletten berechnet werden, um eine für einen Transport optimale mehrstufige Aufteilung zu erreichen.

Wenngleich das Verfahren bevorzugt vor einer realen Aufteilung eines Kommissionierauftrages durchgeführt wird, kann die Bildung von Varianten und Auswahl einer Variante für die Aufteilung auch während des Kommissionierens erfolgen. Dies kann günstig sein, wenn beispielsweise im Quelllager erwartete Kolli nicht vorrätig sind und somit rasch auf ein alternatives Packbild sowie eine alternative Aufteilung ausgewichen werden muss.

Es hat sich als günstig erwiesen, dass Varianten, welche eine definierte Anzahl von erforderlichen Fahrten überschreiten, bei der Auswahl nicht berücksichtigt werden. Dadurch können auf einfache Weise frühzeitig besonders ungünstige Varianten bei der Auswahl ausgeschlossen werden. Eine Maximalanzahl von Fahrten der Ladungsträger vom Transportfahrzeug zu Zielpositionen am Zielort kann rechnerisch beispielsweise gemäß folgender Formel auf einfache Weise bestimmt werden:

$$\#erlaubeLTFahrten = \left( \sum_{Warengruppen} \left\lceil \frac{VolumenWarengruppe}{SollVolumenLT} \right\rceil + 1 \right) - 1$$

Dabei entspricht #erlaubeLTFahrten der Anzahl der Fahrten, VolumenWarengruppe einem Volumen aller Kolli eines Kommissionierauftrages derselben Warengruppe und SollVolumenLT einem auf bzw. in einem Ladungsträger verfügbaren Volumen zum Transport von Waren bzw. Kolli.

Wie ersichtlich wird dabei je Warengruppe an Hand des Volumens der Warengruppe sowie des Volumens eines Ladungsträgers errechnet, auf wie vielen unterschiedlichen Ladungsträgern jede Warengruppe bei einer manuellen Kommissionierung mindestens aufgeteilt werden müsste. Der dabei erhaltene Wert wird aufgerundet und um eins erhöht, um abzubilden, dass eine Warengruppe auf einem Rollbehälter begonnen wird und einige Reste auf einem weiteren Rollbehälter platziert werden. Darüber wird die Summe über alle Warengruppen gebildet und das dabei erhaltene Ergebnis um eins reduziert, um der ersten Warengruppe eines Kommissionierauftrages gerecht zu werden, welche direkt mit einem vollständigen Rollbehälter beginnen kann. Ein derart erhaltener Wert kann eine Obergrenze für als günstig bewertete Varianten bei der Berechnung bzw. der Simulation darstellen, um eine Auswahl zwischen verschiedenen Varianten zu ermöglichen bzw. zu vereinfachen.

Bevorzugt geht eine Anzahl von Ladungsträgern, auf welche der Kommissionierauftrag aufgeteilt wird, in die Auswahl ein. Dadurch wird auf einfache Weise eine Aufteilung erreicht, welche nicht nur einer Anzahl von Fahrten der Ladungsträger vom Transportfahrzeug zu Zielpositionen, sondern auch einer Anzahl von erforderlichen Ladungsträgern Rechnung trägt. Selbstverständlich können ergänzend zu Anzahl von Fahrten der Ladungsträger am Zielort und Anzahl der Ladungsträger weitere Bewertungskriterien für eine Auswahl einer Variante einer Aufteilung des Kommissionierauftrages herangezogen werden. Eine Gewichtung der einzelnen Bewertungskriterien kann dabei beispielsweise abhängig von weiteren Randbedingungen wie einer maximalen Anzahl von in einem Transportfahrzeug transportierbaren Ladungsträgern erfolgen.

Es hat sich als günstig erwiesen, dass Varianten, welche eine Sollanzahl von Ladungsträgern überschreiten, bei der Auswahl nicht berücksichtigt werden. Die Sollanzahl von Ladungsträgern ergibt sich üblicherweise durch Division eines Gesamtvolumens eines Kommissionierauftrages durch ein Sollvolumen eines Ladungsträgers. In der Regel entspricht das Sollvolumen eines Ladungsträgers etwa 80 % eines geometrischen Volumens des Ladungsträgers. Hierbei wird der real bzw. der erfahrungsgemäß erreichbaren Packungsdichte Rechnung getragen. Bei günstigem Packbild kann daher die Anzahl der tatsächlich benötigten Ladungsträger kleiner sein als die Sollanzahl. Das geometrische Volumen ist beispielsweise bei einem Rollbehälter im Wesentlichen durch Grundfläche und Höhe definiert und entspricht dem bei einer Packungsdichte von 100 % erreichbaren Ladevolumen.

Um Beschädigungen von Waren während des Transportes zu vermeiden, ist es günstig, wenn eine Stabilität eines Packbildes der Kolli auf einzelnen Ladungsträgern bestimmt wird und diese Stabilität in die Auswahl eingeht. Üblicherweise erfolgt die Stabilitätsbestimmung rechnerisch, nachdem eine Variante einer Aufteilung zumindest teilweise gebildet wurde. Die Stabilitätsbestimmung kann auch während der Bildung einer Variante erfolgen, um die Variantenbildung abzubrechen, wenn ein Stabilitätskriterium nicht erfüllt wird. Zur Stabilitätsbestimmung und Bewertung können verschiedenste aus dem Stand der Technik bekannte Verfahren zur Stabilitätsbestimmung bzw. zur Festigkeits- und Steifigkeitsberechnung eingesetzt werden. Üblicherweise wird somit eine Variante für eine reale Aufteilung gewählt, welche insbesondere ein definiertes Stabilitätskriterium erreicht, wonach die reale Aufteilung erfolgt.

Besonders günstig ist es, wenn die Stabilität unter Berücksichtigung einer Belastbarkeit der einzelnen Kolli sowie eines Gewichtes der einzelnen Kolli automatisiert bestimmt wird, wobei Belastbarkeit und Gewicht der Kolli vorzugsweise in einer Datenbank abgespeichert sind. Grundsätzlich können Belastbarkeit und Gewicht beliebig genau in der Datenbank gespeichert sein und bei Simulation bzw. Optimierung eines Packbildes berücksichtigt werden. Insbesondere für einen Einsatz des Verfahrens zum Transport von Waren in Supermärkte, wobei eine Vielzahl unterschiedlicher und häufig wechselnder Waren bzw. Kolli zu transportieren sind, ist es jedoch vorteilhaft, wenn die einzelnen Kolli in einige wenige, beispielsweise drei, Belastbarkeitsklassen eingeteilt sind.

Beispielsweise können dann stabile Kolli wie Konservendosen gezielt zur Fundamentbildung auf verschiedenen Ladungsträgern eingesetzt werden. Weniger belastbare Kolli, welche beispielsweise Knabbergebäck enthalten, können dann auf den Konservendosen abgelegt werden. Im Unterschied dazu wird bei Kommissionierverfahren des Standes der Technik in der Regel versucht, gleichartige Waren soweit möglich auf einem Ladungsträger zusammenzufassen bzw. werden die Waren entsprechend einem Lagerspiegel des Quelllagers sequentiell aufgeteilt. Damit ist der Nachteil verbunden, dass Ladungsträger, bei welchen wenig belastbare Kolli bodenseitig eingesetzt werden, häufig nicht vollständig gefüllt werden können, da dies zu Beschädigungen der bodenseitigen Kolli führen würde und dadurch ein verfügbares Volumen nicht vollständig ausgenutzt werden kann.

Bei der Bildung von Varianten bzw. der Auswahl einer von mehreren rechnerisch gebildeten Varianten kann auch ein Maximalgewicht von Ladungsträgern berücksichtigt werden. Dabei kann das Maximalgewicht auch abhängig vom Zielort sein, wenn beispielsweise an einem Zielort aufgrund lokaler Gegebenheiten ein manuelles Manipulieren des Ladungsträgers erforderlich ist. Es kann dadurch eine Überlastung der Ladungsträger vermieden sowie gegebenenfalls eine manuelle Hantierbarkeit gewährleistet werden.

Bei Berücksichtigung der Belastbarkeit im Rahmen der Bildung von Varianten mittels einer einer realen Aufteilung vorgelagerten Simulation bzw. Berechnung kann sich somit bereits eine Reduktion der Anzahl der Ladungsträger ergeben, wenn ein verfügbares Volumen je Ladungsträger besser ausgenutzt wird.

Besonders günstig ist es, wenn die einzelnen Kolli nach Belastbarkeit unterschiedlicher Oberflächenbereiche, insbesondere einer Belastbarkeit an einem Rand, an Ecken und/oder einer Fläche, kategorisiert sind, um die Stabilität des Packbildes zu bestimmen. Dies ermöglicht eine besonders hohe Packungsdichte, da dabei bereits in der Simulation bzw. Berechnung der Varianten auch berücksichtigt werden kann, dass beispielsweise aus Karton bestehende Kolli an Ecken und Kanten eine höhere Belastbarkeit aufweisen als in einem Zentrum einer Deckfläche.

Neben einem Rand und Ecken können Kolli auch weitere Oberflächenbereiche mit höherer Belastbarkeit aufweisen. Beispielsweise können in einem Kollo positionierte Gegenstände wie Kartons durch senkrechte Wände zu linienförmigen Bereichen mit höherer Belastbarkeit des entsprechenden Kollo führen. Solche Bereiche können auch als Stege bezeichnet werden können.

Darüber hinaus können somit auch solche Kolli bodenseitig in einem Ladungsträger eingesetzt werden, welche einseitig offen sind, und bislang aufgrund geringer Belastbarkeit bei manueller Kommissionierung nur kopfseitig in Ladungsträgern eingesetzt wurden. Bei derartigen Kolli ergibt sich im Unterschied zu geschlossenen quaderförmigen Kolli eine unsymmetrische Belastbarkeit der einzelnen Kanten, da nicht jede Kante durch eine Fläche beispielsweise aus Karton unterstützt ist. Bei Berücksichtigung der belastbaren Bereiche von Kolli können auch solche Kolli bodenseitig eingesetzt werden, wenn darüber positionierte Kolli derart angeordnet werden, dass nur die belastbaren Bereiche der darunterliegenden Kolli belastet werden. Ein Kollo mit einer derartigen einseitig offenen Oberfläche wird auch als Display bezeichnet, da die nicht geschlossene Oberfläche eine Präsentation der Waren im Regal ermöglicht. Solche Kolli werden häufig bei Discountern eingesetzt, da ein Auspacken von Waren aus dem Kollo dabei entfallen kann.

Eine Kategorisierung der einzelnen Kolli bzw. der einzelnen Oberflächenbereiche der Kolli kann empirisch mittels eines Versuches, rechnerisch oder durch Abschätzung erfolgen.

Um eine hohe Packungsdichte zu erreichen, kann es günstig sein, wenn in einer Datenbank gespeicherte Daten betreffend eine maximale Neigung der einzelnen Kolli bei Bestimmung der Stabilität berücksichtigt werden. Es kann dann ein Kollo, welcher geneigt transportiert werden kann, beispielsweise auf mehreren anderen Kolli abgelegt werden, welche nebeneinander positioniert und unterschiedlich hoch sind. Dadurch können auch Lagen aus unterschiedlich hohen Kolli großflächig belastet werden.

Eine Anzahl möglicher Varianten steigt mit der Fakultät der Anzahl der Kolli bzw. der Anzahl der Warengruppen. Eine Berechnung sämtlicher möglicher Varianten ist daher bei umfangreichen Kommissionieraufträgen mit einem großen Zeit- bzw. Rechenaufwand verbunden. Um bereits mit geringem Zeit- bzw. Rechenaufwand zu vorteilhaften Varianten bzw. einer günstigen Aufteilung des Kommissionierauftrages zu gelangen, werden bevorzugt bei der Bildung von Varianten Kolli, welche nach Warengruppen und Belastbarkeitsklassen kategorisiert sind, zu Lagen mit einer Grundfläche, welche im Wesentlichen einer Grundfläche des Ladungsträgers entspricht, kombiniert. Dadurch wird eine Anzahl möglicher Varianten deutlich reduziert. Weiter hat sich gezeigt, dass durch Kombination von Kolli gleichartiger Warengruppen und ähnlicher Belastbarkeit sowohl eine günstige Stabilität als auch eine hohe Packungsdichte und eine geringe Anzahl von Fahrten am Zielort erzielt werden.

Alternativ zu Lagen mit einer Grundfläche entsprechend einer Grundfläche des Ladungsträgers können auch Kolli gleichartiger Warengruppen zu Bausteinen zusammengefasst werden, welche beispielsweise eine Grundfläche entsprechend einer Hälfte der Grundfläche des Ladungsträgers aufweisen. Es kann daher auch günstig sein, wenn bei der Bildung von Varianten Kolli, welche nach Warengruppen und Belastbarkeitsklassen kategorisiert sind, zu Bausteinen mit einer Grundfläche, welche im Wesentlichen der Hälfte oder einem Viertel einer Grundfläche des Ladungsträgers entspricht, kombiniert werden. Ein stabiles Packbild kann mit derartigen Bausteinen beispielsweise dadurch erreicht werden, dass übereinanderliegende Bausteine sich nur teilweise überlappen bzw. verschachtelt angeordnet werden, sodass sich keine instabile Turmbildung auf dem Ladungsträger ergibt.

Bei der Variantenbildung können auch Bausteine aus mehreren Kolli berechnet werden, welche sich teilweise oder gänzlich über mehr als eine Lage erstrecken. Dadurch ist auch bei einem Kommissionierauftrag mit vielen Kolli unterschiedlicher Größe eine hohe Packungsdichte erreichbar, wenn beispielsweise weder große quaderförmige Bausteine noch volle Lagen aus Kolli gleicher Höhe gebildet werden können. Beispielsweise können zwei in einer Seitenansicht L-förmige Bausteine bei Drehung eines Bausteines mit hoher Packungsdichte auf einem Ladungsträger kombiniert werden.

Es hat sich bewährt, dass bei der Bildung von Varianten Kolli, welche in einem vorhergehenden Verfahrensschritt nicht zu vollen Lagen und/oder Bausteinen kombiniert werden konnten, berechnet und zu Resten kombiniert werden, wonach die Reste geteilt oder mit anderen Resten kombiniert werden, bis eine Anzahl der Reste etwa der Anzahl der Ladungsträger entspricht, wonach die Reste rechnerisch auf die Ladungsträger verteilt werden. Dadurch wird eine effiziente Variantenbildung bzw. Berechnung von günstigen Varianten erreicht. Bevorzugt ist vorgesehen, dass am Ende dieses Verfahrensschrittes die Anzahl der Reste genau der Anzahl der Ladungsträger entspricht, um in weiterer Folge günstige Varianten von Aufteilungen zu bilden.

Von Vorteil ist es, wenn Varianten gebildet werden, indem Ladungsträger in einem weiteren Schritt rechnerisch mit Lagen und/oder Bausteinen befüllt werden, wobei die Lagen und/oder Bausteine rechnerisch jeweils unter bereits positionierten Lagen, Bausteinen und/oder Resten angeordnet werden, wonach die Varianten bewertet werden. Dadurch wird eine hohe Stabilität des Packbildes bei hoher Packungsdichte mit geringem Rechen- und Zeitaufwand in der Variantenbildungs- bzw. Simulationsphase erreicht. Durch Vertauschen von Lagen, Bausteinen und/oder Resten bei dadurch erhaltenen Aufteilungen können weitere vorteilhafte Varianten erhalten werden, welche nachfolgend bewertet werden. Die Bewertung kann dabei basierend auf der Stabilität des Packbildes, der Anzahl der Fahrten am Zielort und der Anzahl der Ladungsträger erfolgen.

Um die Anzahl der zu beurteilenden Varianten weiter zu minimieren, ist es günstig, wenn die Lagen und/oder Bausteine basierend auf einer Belastbarkeit der Kolli auf die Ladungsträger verteilt werden, wobei relativ hoch belastbare Lagen bevorzugt an unteren Positionen auf den Ladungsträgern positioniert werden. In der Regel werden die belastbarsten Lagen oder Bausteine eines Kommissionierauftrages an unteren Positionen der Ladungsträger positioniert, um ein stabiles Fundament zu bilden, während Lagen, Bausteine bzw. Reste des Kommissionierauftrages mit einer relativ geringen Belastbarkeit in oberen Bereichen positioniert werden, um eine optimale Aufteilung auf mehrere Ladungsträger zu erreichen.

Werden Lagen und/oder Bausteine bei der Variantenbildung unter bestehende Lagen, Bausteine und/oder Reste positioniert, ist es günstig, wenn aus den bereits positionierten Resten, Lagen und/oder Bausteinen eine erforderliche Belastbarkeit und Warengruppe ermittelt wird, welche erforderlich ist, um eine Stabilität des Packbildes zu erhalten und die Anzahl der Fahrten nicht zu erhöhen. Beispielsweise kann eine aus Süßwaren bestehende und bereits positionierte Lage zu Knabbergebäck als zulässige Warengruppen für eine darunter angeordnete Lage führen, wenn diese Warengruppen im Supermarkt in angrenzenden Regalen positioniert sind und Knabbergebäck für Süßwaren ausreichend belastbar ist. Es wird somit ein Packbild auf den Ladungsträgern erreicht, indem immer belastbarere Lagen unter bereits rechnerisch positionierte Lagen, Bausteine und/oder Reste geschoben werden.

Zur Optimierung einer Effizienz beim Transport hat es sich bewährt, dass rechnerisch nach Positionierung der Lagen und/oder Bausteine ein Optimierungsschritt erfolgt, wobei Lagen und/oder Bausteine vertauscht werden, um Varianten zu bilden, welche anhand der erforderlichen Anzahl von Fahrten automatisiert bewertet werden, bevor die Auswahl erfolgt. Häufig können dadurch Varianten gebildet werden, welche eine reduzierte Anzahl von Fahrten am Zielort aufweisen.

Es hat sich als vorteilhaft erwiesen, wenn die Bildung von Varianten unter Anwendung eines Greedy-Algorithmus erfolgt, wobei nach rechnerischer Positionierung eines Kollo eine Bewertung der Positionierung erfolgt und Varianten, welche eine definierte Bewertung nicht erreichen, nicht weiterverfolgt werden. Dadurch können auf einfache Weise ganze Äste eines Lösungsbaumes, welche ungünstige Lösungen aufweisen, bereits in einer frühen Phase ausgeschlossen werden, sodass sich eine Simulation jeder einzelnen möglichen Lösung der entsprechenden Äste erübrigt und eine effiziente Berechnung und Aufteilung des Kommissionierauftrages möglich ist.

Das Verfahren kann grundsätzlich mit verschiedensten Ladungsträgern umgesetzt werden. Je nach Art des Kommissionierauftrages bzw. der zu beliefernden Kunden können beispielsweise Paletten als Ladungsträger eingesetzt werden.

Bei Transport von unterschiedlichen Waren zu Supermärkten hat es sich bewährt, dass verfahrbare Rollbehälter mit einer rechteckigen Basis und zwei von der Basis aufragenden Wänden als Ladungsträger eingesetzt werden. Die Wände sind üblicherweise an gegenüberliegenden Seiten der Basis positioniert, wobei die weiteren Seiten der Basis keine Wände aufweisen. Dadurch kann eine höhere Stabilität bei gleichzeitig einfacher Hantierbarkeit erreicht bzw. ein Herabfallen von Waren an den Seiten der Basis, an welchen Wände positioniert sind, verhindert werden.

Selbstverständlich kann das Verfahren auch mit umseitig geschlossenen Rollbehältern oder mit Rollbehältern, welche an nur drei Seiten Wände aufweisen, umgesetzt werden.

Ein weiterer Aspekt der Erfindung sieht einen computerlesbaren Datenträger vor, auf dem ein Computerprogramm zur Durchführung eines erfindungsgemäßen Verfahrens auf einen Computer gespeichert ist. Das Computerprogramm weist üblicherweise Schnittstellen zu Datenbanken auf, welche Daten zu Kommissionieraufträgen, Kolli, Waren sowie Belastbarkeits- und Gewichtsdaten der Kolli enthalten. Darüber hinaus kann das Computerprogramm auch mit Datenbanken betreffend ein Layout an einem Zielort wie eine Positionierung von Regalen in einem Supermarkt verbunden sein, um einen Kommissionierauftrag für einen besonders effizienten Transport auf verschiedene Ladungsträger aufzuteilen und gegebenenfalls auch ein Packbild der Kolli auf den Ladungsträgern zu berechnen und auszugeben. Eine physische Aufteilung des Kommissionierauftrages auf die einzelnen Ladungsträger kann dann manuell anhand mittels des Computerprogrammes berechneten Packbildes bzw. der berechneten Aufteilung oder gegebenenfalls teil- oder vollautomatisiert mittels eines Roboters erfolgen.

Weitere Merkmale, Vorteile und Wirkungen der Erfindung geben sich anhand der nachfolgend dargestellten Ausführungsbeispiele. In den Zeichnungen, auf welche dabei Bezug genommen wird, zeigen:

Fig. 1 schematisch ein Flussdiagramm eines erfindungsgemäßen Verfahrens;
Fig. 2 auf einem Ladungsträger kommissionierte Kolli;
Fig. 3 eine aus gleichartigen Kolli bestehende Lage auf einem Ladungsträger;
Fig. 4 bis 6 verschiedene auf Ladungsträger aufgeteilte Kommissionieraufträge;
Fig. 7 bis 11 verschiedene Kolli in einer Draufsicht.

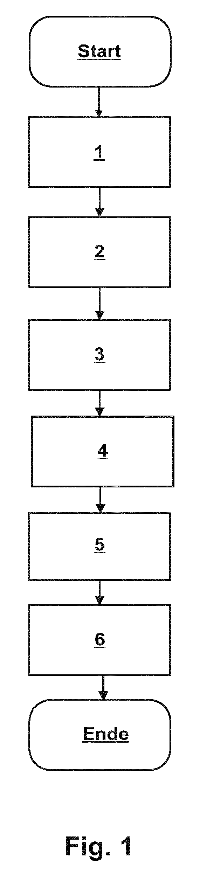

Fig. 1 zeigt schematisch ein Flussdiagramm eines erfindungsgemäßen Verfahrens. Dabei wird in einem ersten Schritt 1 eine theoretische Sollanzahl von Ladungsträgern 7 bestimmt, auf welche ein Kommissionierauftrag aufgeteilt werden kann. Dies kann beispielsweise durch Division eines Gesamtvolumens eines Kommissionierauftrages durch ein Volumen, welches auf einem Ladungsträger 7 positionierbar ist, errechnet werden.

In einem zweiten Schritt 2 werden mögliche Bausteine bzw. Lagen 9 berechnet. Hierzu wird ein Kommissionierauftrag nach Warengruppen und Belastbarkeitsklassen eingeteilt. Ausgehend von neun Warengruppen und drei Belastbarkeitsklassen ergeben sich dabei beispielsweise 27 unterschiedliche Teile eines Kommissionierauftrages. Für jedes dieser Teile werden sämtliche mögliche Permutationen von Lagen 9 berechnet, wobei dadurch ein und derselbe Kollo 8 in unterschiedlichen Lagen 9 vorkommen kann. Die Bildung einer Lage 9 stellt mathematisch ein zweidimensionales Packungs-Problem dar, welches optimal lösbar ist. Natürlich kann die Bildung einer Lage 9 auch unter Einsatz eines heuristischen Verfahrens erfolgen. Ergibt sich bei der Berechnung, dass mehr als eine Lösung für eine Lage 9 existiert, wird jene Lösung bevorzugt, welche eine höhere Stabilität aufweist. Um Rechenzeit zu optimieren, kann nach jedem rechnerisch platzierten Kollo 8 die Fertigstellung der Lage 9 mittels eines Greedy-Algorithmus simuliert und anhand dessen eine Evaluation der Platzierung durchgeführt werden. Dadurch können schlechte Lösungen im Lösungsbaum frühzeitig ausgeschlossen werden. Derartige Berechnungen können parallelisiert abgearbeitet werden, wodurch die Laufzeit reduziert werden kann.

Eine Lage 9 ist dabei durch eine Grundfläche gekennzeichnet, welche im Wesentlichen der Grundfläche des Ladungsträgers 7 entspricht. Da ab einer bestimmten Höhe ein Überstand der Lagen 9 zulässig sein kann, können weiter oben auf einem Ladungsträger 7 positionierte Lagen 9 auch eine geringfügig größere Grundfläche als der jeweilige Ladungsträger 7 aufweisen.

Üblicherweise wird dabei eine Lage 9 durch Kolli 8 mit gleicher Höhe bzw. gleiche Kolli 8 gebildet, sodass eine Oberfläche der Lage 9 eben ist. Dies ermöglicht eine einfache Kombination verschiedener Lagen 9 übereinander, weswegen derartige Lagen 9 gleichartiger Warengruppen bzw. gleichartiger Kolli 8 bevorzugt eingesetzt werden. Sofern keine ausreichende Menge gleichartiger Kolli 8 zur Bildung einer Lage 9 vorhanden ist, kann gegebenenfalls ein Baustein aus gleichartigen Kolli 8 gebildet werden, welcher beispielsweise eine Grundfläche entsprechend einer halben Grundfläche des Ladungsträgers 7 aufweist. Durch Kombination entsprechender Bausteine, gegebenenfalls einer verschachtelten Anordnung derselben, kann ebenfalls eine hohe Packungsdichte und Stabilität erreicht werden.

In einem dritten Schritt 3 werden verbleibende Kolli 8 bzw. Reste, aus welchen keine vollen Lagen 9 gebildet werden können, berechnet. Dabei können Reste durch Kombination solcher Kolli 8 mit unterschiedlichen Grundflächen berechnet werden, wobei jene mit einer größeren Grundfläche üblicherweise nur dann behalten werden, wenn dies zu einem kompakteren Ergebnis führt.

In einem vierten Schritt 4 werden die Reste auf Ladungsträger 7 verteilt. Hierzu wird zunächst evaluiert, ob mehr Reste als gewünschte Ladungsträger 7 bzw. Rollbehälter zur Verfügung stehen. In diesem Fall werden die Reste kombiniert, wobei es auch sinnvoll sein kann, bestehende Lagen 9 aufzulösen und als Rest zu betrachten. Dabei kann es zweckmäßig sein, nicht sämtliche Permutationen bzw. mögliche Varianten zu bestimmen, um eine Rechenzeit zu optimieren. Eine Reduktion der zu berechnenden und zu untersuchenden Varianten kann erfolgen, indem anhand von Belastbarkeits- und Gewichtsklassen der Warengruppen bestimmt wird, ob eine Warengruppe zwingend vor oder nach einer anderen Warengruppe platziert werden muss, um bestimmte Varianten auszuschließen. Beispielsweise führt eine Kombination einer schweren und stark belastbaren Warengruppe mit einer leichten und wenig belastbaren Warengruppe dazu, dass erstere jedenfalls zuerst bzw. unten auf einem Ladungsträger 7 positioniert werden muss, sodass Varianten, bei welchen die wenig belastbare Warengruppe unten positioniert ist, bereits früh ausgeschieden werden können und nicht somit berechnet werden müssen.

Des Weiteren können Varianten gebildet werden, indem ein oder mehrere Zwischenbretter 20 je Ladungsträger 7 eingefügt werden. Zwischenbretter 20 bilden eine ebene Auflagefläche, sodass auch auf einem unebenen Untergrund, welcher beispielsweise durch Kolli 8 unterschiedlicher Größe gebildet wird, volle Lagen 9 stabil abgelegt werden können. Allerdings sind Zwischenbretter 20 als nachteilig anzusehen, da diese beim manuellen Kommissionieren einen zusätzlichen Handgriff für den Kommissionierer bedingen. Des Weiteren kann ein Zwischenbrett 20 ein nachträgliches Folieren des Ladungsträgers 7 erforderlich machen.

Stehen weniger Reste als zulässige Ladungsträger 7 zur Verfügung, können zusätzliche Varianten durch Teilung der Reste gebildet werden, um eine höhere Packungsdichte zu erreichen.

Es wird somit im Ergebnis dieses vierten Schrittes 4 erreicht, dass die Anzahl der zu verteilenden Reste etwa gleich groß ist wie die Anzahl der gewünschten Rollbehälter, sodass in der Simulation auf Ladungsträger 7 verteilte Reste vorliegen.

In einem fünften Schritt 5 werden rechnerisch verschiedene Varianten simuliert, wobei rechnerisch unter die Reste auf den jeweiligen Ladungsträgern 7 Lagen 9 geschoben bzw. Lagen 9 unter den Resten positioniert werden.

Dies entspricht einem Optimierungsproblem, um sowohl Stabilität als auch Anzahl von Fahrten des Ladungsträgers 7 am Zielort jedes Ladungsträgers 7 zu optimieren. Bekannt ist dabei jeweils, welche Lage 9 unter dem bereits positionierten Rest bzw. der bereits positionierten Lage 9 positioniert werden darf, ohne dass dies zu einer zusätzlichen Fahrt am Zielort oder einem Überlasten der Lage 9 führt. Dieses Optimierungsproblem kann beispielsweise mit einem heuristischen Ansatz oder einem Mixed-Integer-Ansatz gelöst werden. Ein dabei erhaltenes Ergebnis wird bewertet und bei positiver Bewertung, beispielsweise anhand von Kriterien wie Stabilität, Anzahl der Fahrten und Anzahl der Ladungsträger 7, mit einem weiteren Schritt fortgefahren. Bei negativer Bewertung werden neue Varianten durch Vertauschen von Lagen 9 gebildet, um diese erneut zu bewerten.

In einem sechsten Schritt 6 werden Fahrten der Ladungsträger 7 von einem Transportfahrzeug am Zielort zu Zielpositionen berechnet, wobei beispielsweise durch Vertauschen von Lagen 9, Bausteinen und/oder Resten neue Varianten gebildet und eine Optimierung der Fahrten erreicht wird. Abhängig von der im fünften Schritt 5 gefundenen Lösung kann das Verbesserungspotenzial durch zusätzliche Variantenbildung im sechsten Schritt 6 größer oder kleiner sein, zumal auch im fünften Schritt 5 bereits eine Optimierung der Fahrten erfolgt. Es wird somit im sechsten Schritt 6 gegebenenfalls noch eine Auswahl zwischen mehreren vorteilhaften Varianten getroffen, welche einander ähnlich sein können, da besonders ungünstige Varianten bereits in vorhergehenden Schritten ausgeschlossen wurden, um die Rechenzeit zu optimieren.

Die gewählte Variante bzw. eine gefundene Aufteilung wird gegebenenfalls samt einem Packbild beispielsweise über einen Bildschirm oder eine Datenbrille ausgegeben, sodass die manuelle, teil- oder vollautomatisierte Kommissionierung erfolgen kann.

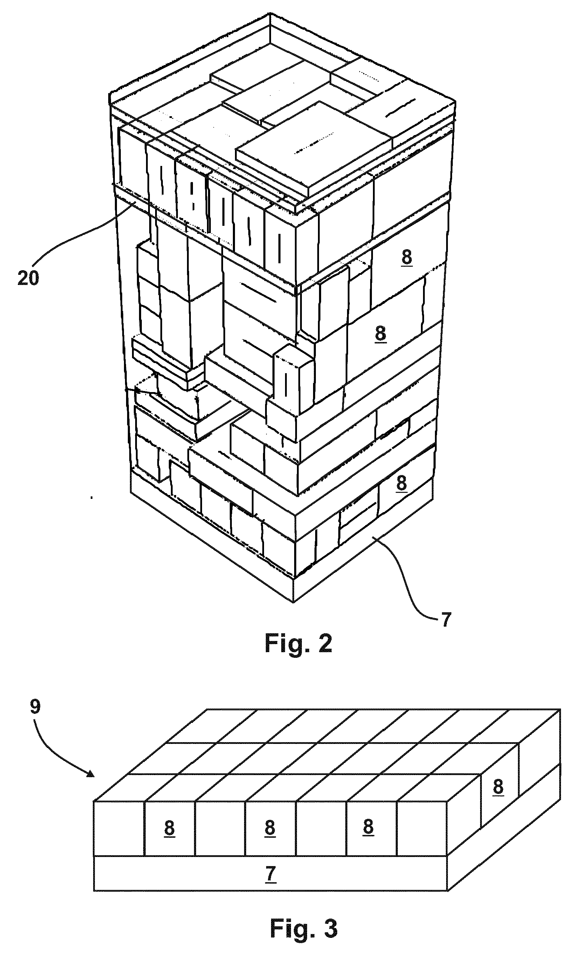

Fig. 2 zeigt ein manuell kommissioniertes Packbild von Kolli 8 unterschiedlicher Größe auf einem Ladungsträger 7. Wie ersichtlich sind bei diesem Packbild auch Zwischenbretter 20 vorgesehen, um unterschiedliche Höhen einzelner Kolli 8 auszugleichen.

Fig. 3 zeigt Kolli 8 einer Warengruppe, welche zu einer Lage 9 kombiniert sind. Wie ersichtlich entspricht eine Grundfläche der Lage 9 im Wesentlichen der Grundfläche des Ladungsträgers 7. Bei weiter oben auf dem Ladungsträger 7 positionierten Lagen 9 kann eine Grundfläche der Lage 9 auch größer sein, da ein Überstand bei zunehmender Höhe der Lage 9 auf dem Ladungsträger 7 zulässig sein kann.

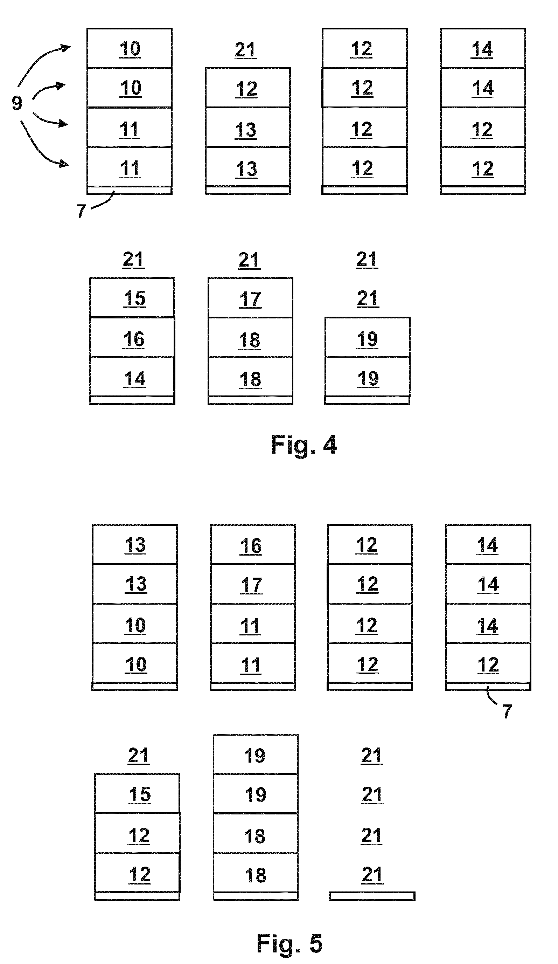

Fig. 4 bis 6 zeigen beispielhaft unterschiedliche Aufteilungen desselben Kommissionierauftrages für einen Supermarkt auf mehrere Ladungsträger 7, um Optimierungsmöglichkeiten des erfindungsgemäßen Verfahrens zu veranschaulichen.

Im Beispiel besteht der Kommissionierauftrag jeweils aus mehreren Kolli 8 mit Getränken 10, Dosen 11, Konserven 12, Spirituosen 13, Teigwaren 14, Kosmetikprodukten 15, Gewürzen 16, Süßwaren 17, Reinigungsprodukten 18 und Knabbergebäck 19. Im Ausführungsbeispiel können die Kolli 8 gleichartiger Warengruppen jeweils auf volle Lagen 9 aufgeteilt werden, sodass keine Reste verbleiben. Im Ausführungsbeispiel kann ein Ladungsträger 7 mit vier übereinander angeordneten Lagen 9 beladen werden, welche zur vereinfachten Darstellung dieselbe Höhe aufweisen.

Wie ersichtlich sind in der in Fig. 4 dargestellten Aufteilung gleichartige Waren soweit möglich auf einem gemeinsamen Warenträger positioniert. Dies ergibt sich üblicherweise bei Verfahren des Standes der Technik, wenn ein Kommissionierauftrag sequentiell auf verschiedene Ladungsträger 7 aufgeteilt wird. Dadurch ergeben sich auch auf mehreren Ladungsträgern 7 Leerlagen 21, weil beispielsweise eine maximale Belastbarkeit einer Lage 9 des Ladungsträgers 7, wie bei der Knabbergebäck 19 enthaltenden Lage 9 auf dem zweiten Ladungsträger 7 und der Gewürze 16 enthaltenden Lage 9 auf dem fünften Ladungsträger 7, bereits bei nur drei Lagen 9 auf dem Ladungsträger 7 erreicht ist, sodass keine weitere Zuladung auf denselben Ladungsträger 7 möglich ist. Eine Leerlage 21 ist dabei definiert durch einen leeren Raum auf einem Ladungsträger 7 mit einem Volumen entsprechend einer aus Kolli 8 bestehenden Lage 9. Somit ergibt sich eine Aufteilung des Kommissionierauftrages auf sieben Ladungsträger 7, wobei am Zielort elf Fahrten der Ladungsträger 7 erforderlich sind, um die einzelnen Kolli 8 vom Transportfahrzeug zu endgültigen Zielpositionen im Supermarkt zu transportieren, an welchen entsprechende Regale für die Waren angeordnet sind.

Fig. 5 zeigt eine weitere Aufteilung desselben Kommissionierauftrages. Wie ersichtlich sind dabei gleichartige Waren auf mehrere Ladungsträger 7 aufgeteilt. Beispielsweise sind Konserven 12 sehr belastbar, weswegen diese nunmehr bei drei Ladungsträgern 7 eine bodenseitige Lage 9 bilden, welche mit drei weiteren Lagen 9 belastbar ist. Dadurch werden Leerlagen 21 bei den meisten Ladungsträgern 7 vermieden bzw. sind vier Leerlagen 21 auf dem siebenten Ladungsträger 7 angeordnet, wodurch die Aufteilung desselben Kommissionierauftrages auf nur sechs Ladungsträger 7 möglich ist. Eine Anzahl von Fahrten der als Rollbehälter ausgebildeten Ladungsträger 7 im Supermarkt ist bei dieser Aufteilung gleich wie bei der in Fig. 4 dargestellten und beträgt ebenfalls elf.

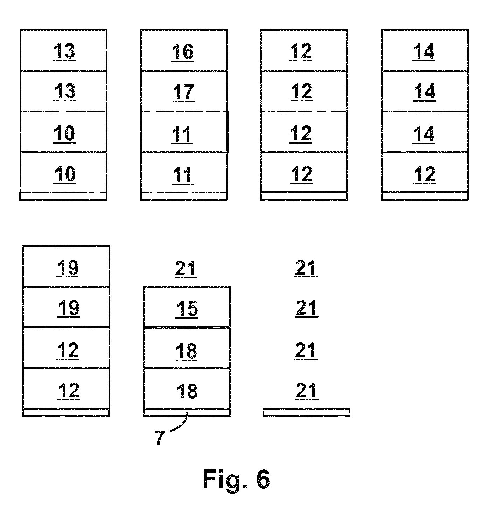

Fig. 6 zeigt eine weitere Optimierung, wobei mittels Vertauschung eine Anzahl von Fahrten der Ladungsträger 7 vom Transportfahrzeug zu Zielpositionen am Zielort optimiert wurde. Im Beispiel wurden die Kosmetikprodukte 15 des fünften Ladungsträgers 7 aus Fig. 5 mit dem Knabbergebäck 19 des sechsten Ladungsträgers 7 vertauscht, um die in Fig. 6 dargestellte Aufteilung zu erreichen, wobei Knabbergebäck 19 und Konserven 12 auf einem Ladungsträger 7 kombiniert sind. Dadurch konnte die Anzahl der Fahrten im Supermarkt bei unveränderter Anzahl von Ladungsträgern 7 auf zehn reduziert werden, da Knabbergebäck 19 im Supermarkt nahe den Konserven 12, jedoch nicht in Nähe der Reinigungsprodukte 18, gelagert wird. Die Verbesserung zwischen der in Fig. 5 und der in Fig. 6 dargestellten Aufteilung entspricht somit dem sechsten Schritt 6 des in Fig. 1 dargestellten erfindungsgemäßen Verfahrens.

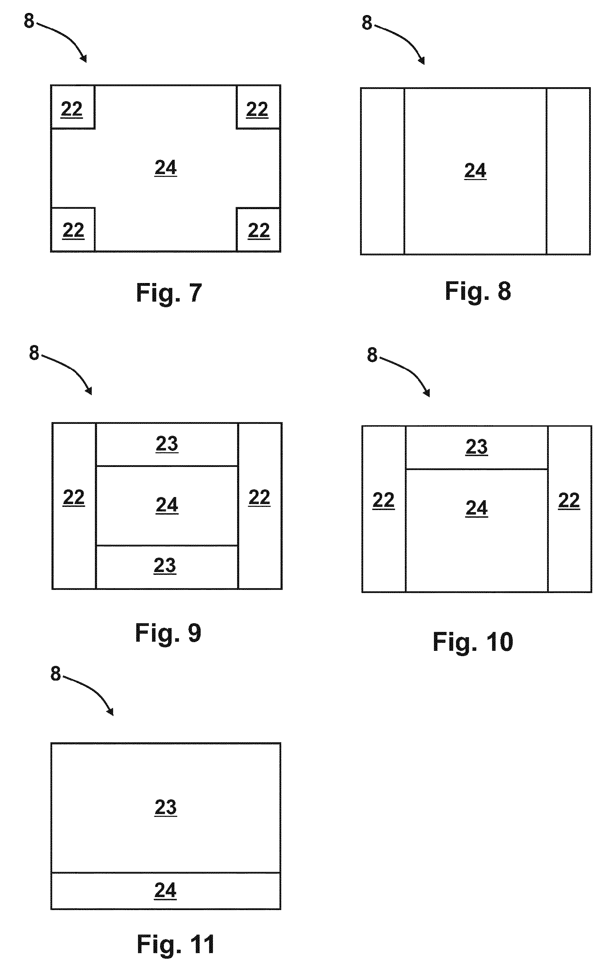

Fig. 7 bis 11 zeigen Oberflächen von Kolli 8 in einer Draufsicht, wobei verschiedene Oberflächenbereiche nach Belastbarkeitsklassen kategorisiert sind. Dabei ergeben sich Bereiche mit hoher Belastbarkeit 22, Bereiche mit mittlerer Belastbarkeit 23 und Bereiche mit geringer Belastbarkeit 24. Die Belastbarkeit der Bereiche ergibt sich dabei in der Regel aus der Konstruktion eines jeweiligen Kollo 8, wobei senkrechte Wände eines Kartons beispielsweise zu einer höheren Belastbarkeit bzw. Festigkeit eines Randbereiches beitragen. Kolli 8 haben somit insbesondere abhängig von Anzahl und Position der Seitenwände unterschiedliche Belastbarkeitsbereiche.

Beispielsweise ist in Fig. 9 die Oberfläche eines klassischen Verpackungskartons mit vier Seitenwänden und entsprechend belastbaren Bereichen an den Rändern dargestellt. Fig. 10 zeigt belastbare Bereiche eines an einer Vorderseite offenen Kartons bzw. Kollos 8, welcher auch als Display bezeichnet und bei Diskountern häufig eingesetzt wird.

Die Kolli 8 sind derart kategorisiert in einer Datenbank abgespeichert, auf welche bei Simulation des Packbildes und Optimierung der Aufteilung zurückgegriffen wird, um eine hohe Stabilität und Packungsdichte zu erreichen. Diese Klassifikation der Oberflächen nach Belastbarkeitsklassen ermöglicht eine besonders effektive Aufteilung, da auch nur schmale belastbare Bereiche der einzelnen Kolli 8 genutzt werden können.

Im Unterschied zu Verfahren des Standes der Technik wird mit dem erfindungsgemäßen Verfahren durch Betrachtung sämtlicher Ladungsträger 7 bei der Simulation, Variantenbildung und Auswahl einer Aufteilung aus simulierten Varianten ein globales Optimum erreicht, während bei Verfahren des Standes der Technik allenfalls eine Optimierung eines Packbildes eines Ladungsträgers 7 erfolgt. Dadurch kann für einen auf mehrere Ladungsträger 7 aufgeteilten Kommissionierauftrag eine Aufteilung mit einer optimalen Anzahl von Ladungsträgern 7 und Fahrten am Zielort erreicht werden.

Mit einem erfindungsgemäßen Verfahren ist somit ein besonders effizienter Transport von Waren von einem Quelllager zu Zielpositionen an einem Zielort möglich, da automatisiert und üblicherweise rechnergestützt verschiedenste Varianten berücksichtigt und evaluiert werden können, wobei auch eine endgültige Position der einzelnen Kolli 8 am Zielort in die Auswahl einer präferierten Variante eingeht, gemäß welche die reale Aufteilung durchgeführt wird.

**Patentansprüche**

1. Verfahren zum Aufteilen eines eine Vielzahl von Kolli (8) umfassenden Kommissionierauftrages auf mehrere Ladungsträger (7), welche Kolli (8) von einem Quelllager mittels eines Transportfahrzeuges in ein Ziellager und im Ziellager zu Zielpositionen transportiert werden, **dadurch gekennzeichnet, dass** vor einer Aufteilung des Kommissionierauftrages mehrere Varianten möglicher Aufteilungen rechnerisch gebildet werden, wonach eine Auswahl einer Variante erfolgt, gemäß welcher die Aufteilung durchgeführt wird, wobei für verschiedene berechnete Varianten eine Anzahl von Fahrten bestimmt wird, welche erforderlich sind, um die einzelnen Kolli (8) im Ziellager mit den Ladungsträgern (7) vom Transportfahrzeug zu den Zielpositionen zu transportieren, und wobei die Anzahl der Fahrten in die Auswahl eingeht.

**2.** Verfahren nach Anspruch 1, **dadurch gekennzeichnet, dass** Varianten, welche eine definierte Anzahl von erforderlichen Fahrten überschreiten, bei der Auswahl nicht berücksichtigt werden.

**3.** Verfahren nach Anspruch 1 oder 2, **dadurch gekennzeichnet, dass** eine Anzahl von Ladungsträgern (7), auf welche der Kommissionierauftrag aufgeteilt wird, in die Auswahl eingeht.

**4.** Verfahren nach Anspruch 3, **dadurch gekennzeichnet, dass** Varianten, welche eine Sollanzahl von Ladungsträgern (7) überschreiten, bei der Auswahl nicht berücksichtigt werden.

**5.** Verfahren nach einem der Ansprüche 1 bis 4, **dadurch gekennzeichnet, dass** eine Stabilität eines Packbildes der Kolli (8) auf einzelnen Ladungsträgern (7) bestimmt wird und diese Stabilität in die Auswahl eingeht.

**6.** Verfahren nach Anspruch 5, **dadurch gekennzeichnet, dass** die Stabilität unter Berücksichtigung einer Belastbarkeit der einzelnen Kolli (8) sowie eines Gewichtes der einzelnen Kolli (8) automatisiert bestimmt wird, wobei Belastbarkeit und Gewicht der Kolli (8) vorzugsweise in einer Datenbank abgespeichert sind.

**7.** Verfahren nach Anspruch 6, **dadurch gekennzeichnet, dass** die einzelnen Kolli (8) nach Belastbarkeit unterschiedlicher Oberflächenbereiche, insbesondere einer Belastbarkeit an einem Rand, an Ecken und/oder einer Fläche, kategorisiert sind, um die Stabilität des Packbildes zu bestimmen.

**8.** Verfahren nach einem der Ansprüche 5 bis 7, **dadurch gekennzeichnet, dass** in einer Datenbank gespeicherte Daten betreffend eine maximale Neigung der einzelnen Kolli (8) bei Bestimmung der Stabilität berücksichtigt werden.

**9.** Verfahren nach einem der Ansprüche 1 bis 8, **dadurch gekennzeichnet, dass** bei der Bildung von Varianten Kolli (8), welche nach Warengruppen und Belastbarkeit kategorisiert sind, zu Lagen (9) mit einer Grundfläche, welche im Wesentlichen einer Grundfläche des Ladungsträgers (7) entspricht, kombiniert werden.

**10.** Verfahren nach einem der Ansprüche 1 bis 8, **dadurch gekennzeichnet, dass** bei der Bildung von Varianten Kolli (8), welche nach Warengruppen und Belastbarkeitsklassen kategorisiert sind, zu Bausteinen mit einer Grundfläche, welche im Wesentlichen der Hälfte oder einem Viertel einer Grundfläche des Ladungsträgers (7) entspricht, kombiniert werden.

**11.** Verfahren nach Anspruch 10, **dadurch gekennzeichnet, dass** bei der Bildung von Varianten Kolli (8), welche in einem vorhergehenden Verfahrensschritt nicht zu vollen Lagen (9) und/oder Bausteinen kombiniert werden konnten, berechnet und zu Resten kombiniert werden, wonach die Reste geteilt oder mit anderen Resten kombiniert werden, bis eine Anzahl der Reste etwa der Anzahl der Ladungsträger (7) entspricht, wonach die Reste rechnerisch auf die Ladungsträger (7) verteilt werden.

**12.** Verfahren nach einem der Ansprüche 9 bis 11, **dadurch gekennzeichnet, dass** Varianten gebildet werden, indem Ladungsträger (7) in einem weiteren Schritt rechnerisch mit Lagen (9) und/oder Bausteinen befüllt werden, wobei die Lagen (9) und/oder Bausteine rechnerisch jeweils unter bereits positionierten Lagen (9), Bausteinen und/oder Resten angeordnet werden, wonach die Varianten bewertet werden.

**13.** Verfahren nach Anspruch 12, **dadurch gekennzeichnet, dass** die Lagen (9) und/oder Bausteine basierend auf einer Belastbarkeit der Kolli (8) auf die Ladungsträger (7) verteilt werden, wobei relativ hoch belastbare Lagen (9) bevorzugt an unteren Positionen auf den Ladungsträgern (7) positioniert werden.

**14.** Verfahren nach einem der Ansprüche 11 bis 13, **dadurch gekennzeichnet, dass** rechnerisch nach Positionierung der Lagen (9) und/oder Bausteine ein Optimierungsschritt erfolgt, wobei Lagen (9) und/oder Bausteine vertauscht werden, um Varianten zu bilden, welche anhand der erforderlichen Anzahl von Fahrten automatisiert bewertet werden, bevor die Auswahl erfolgt.

**15.** Verfahren nach einem der Ansprüche 1 bis 14, **dadurch gekennzeichnet, dass** Bildung von Varianten unter Anwendung eines Greedy-Algorithmus erfolgt, wobei nach rechnerischer Positionierung eines Kollo (8) eine Bewertung der Positionierung erfolgt und Varianten, welche eine definierte Bewertung nicht erreichen, nicht weiterverfolgt werden.

**16.** Verfahren nach einem der Ansprüche 1 bis 15, **dadurch gekennzeichnet, dass** Paletten als Ladungsträger (7) eingesetzt werden.

**17.** Verfahren nach einem der Ansprüche 1 bis 16, **dadurch gekennzeichnet, dass** verfahrbare Rollbehälter mit einer rechteckigen Basis und zwei von der Basis aufragenden Wänden als Ladungsträger (7) eingesetzt werden.

**18.** Computerlesbarer Datenträger, auf dem ein Computerprogramm zur Durchführung eines Verfahrens nach einem der Ansprüche 1 bis 17 auf einem Computer gespeichert ist.

```
        ┌─────────────┐
        │    Start    │
        └──────┬──────┘
               │
               ▼
        ┌─────────────┐
        │      1      │
        └──────┬──────┘
               │
               ▼
        ┌─────────────┐
        │      2      │
        └──────┬──────┘
               │
               ▼
        ┌─────────────┐
        │      3      │
        └──────┬──────┘
               │
               ▼
        ┌─────────────┐
        │      4      │
        └──────┬──────┘
               │
               ▼
        ┌─────────────┐
        │      5      │
        └──────┬──────┘
               │
               ▼
        ┌─────────────┐
        │      6      │
        └──────┬──────┘
               │
               ▼
        ┌─────────────┐
        │    Ende     │
        └─────────────┘
```

# Fig. 1

20

8

8

8

7

**Fig. 2**

9

8

8

8

8

7

**Fig. 3**

Fig. 4

Fig. 5

| 13 |
|:---:|
| 13 |
| 10 |
| 10 |

| 16 |
|:---:|
| 17 |
| 11 |
| 11 |

| 12 |
|:---:|
| 12 |
| 12 |
| 12 |

| 14 |
|:---:|
| 14 |
| 14 |
| 12 |

| 19 |
|:---:|
| 19 |
| 12 |
| 12 |

| 21 |
|:---:|
| 15 |
| 18 |
| 18 |

21

21

21

21

7

# Fig. 6

Fig. 7

Fig. 8

Fig. 9

Fig. 10

Fig. 11

Europäisches
Patentamt

European
Patent Office

Office européen
des brevets

# EUROPÄISCHER RECHERCHENBERICHT

**Nummer der Anmeldung**

EP 16 15 9681

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| | Der Gegenstand der Ansprüche, unter angemessener Berücksichtigung der Beschreibung und der Zeichnungen gemäß Artikel 92 EPÜ, bezieht sich auf Verfahren aus der Liste von Gegenständen und Tätigkeiten, die nach Artikel 52(2) und (3) EPÜ von der Patentierbarkeit ausgeschlossen sind. Die Informationstechnologie, die als Vehikel zur Ausführung der genannten Verfahren eingesetzt wird, wird als so bekannt angesehen, dass ihr Vorhandensein am relevanten Datum nicht mit Grund angezweifelt werden kann. Die beanspruchten technischen Merkmale, nämlich ein vernetztes Rechnersystem und eine Datenbank, werden daher als Teil des notorischen Fachwissens aufgefasst, für welches ein schriftlicher Nachweis nicht als notwendig erachtet wird (siehe Richtlinien für die Prüfung im Europäischen Patentamt, B-VIII, 2.2.1).<br>----- | | INV.<br>G06Q10/08 |
| | | | **RECHERCHIERTE SACHGEBIETE (IPC)** |
| | | | G06Q |

Der vorliegende Recherchenbericht wurde für alle Patentansprüche erstellt

| Recherchenort | Abschlußdatum der Recherche | Prüfer |
|---|---|---|
| Den Haag | 17. August 2016 | Stark, Konrad |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
    Dokument

EPO FORM 1503 03.82 (P04C03)